# EUROPEAN PATENT SPECIFICATION

(11) **EP 3 786 533 B1**
(45) Date of publication and mention of the grant of the patent: **20.05.2026**
(21) Application number: 20193134.2
(22) Date of filing: 27.08.2020
(51) Int. Cl.: F24D 3/18, F24D 19/10

(54) **AUXILIARY HEATER**
ZUSATZHEIZUNG
CHAUFFAGE AUXILIAIRE

(30) Priority: 27.08.2019 GB 201912250
(43) Date of publication of application: 03.03.2021
(73) Proprietor: Grant, Stephen William John, Birr, County Offaly (IE)
(72) Inventor: Grant, Stephen William John, Birr, County Offaly (IE)
(74) Representative: Schütte, Gearoid

(56) References cited:
- EP-A1- 3 220 063
- WO-A2-2009/050396
- CN-A- 108 105 833
- CN-A- 110 030 650
- FR-A3- 3 028 922

## Description

### Introduction

This invention relates to heating systems for buildings.

### Background

Heat pumps are now widely used as an efficient heat source for heating buildings such as domestic dwellings. However, the maximum heat pump that can be fitted is 16 kilowatts on a single phase and this will not sufficiently heat the building in winter time as the amount of heat supplied by the heat pump drops off as the temperature falls. So, particularly in freezing conditions, the heat pump is not sufficient on its own to heat the building.

The present invention is directed towards overcoming this problem.

JP 2014142094 discloses a heating system in which a heat pump normally supplies heat to the heating system. An auxiliary heater is provided between the heat pump and a hot water storage tank for boosting the heat generated by the heat pump if required and can also be used to defrost the heat pump. A similar system is disclosed in JPH 05256520 with an auxiliary heater being mounted between a heat pump and a hot water storage tank to boost water temperature if required, particularly at start-up of the heat pump. JP 2016050731 discloses another water heating system in which a heat pump is used to heat water in a tank. Hot water is delivered from the tank to a hot water supply system via a supply line. If the hot water is too hot, the water from the tank is mixed with cold water delivered from a water supply via a mixing valve. If the hot water is too cold, the hot water from the tank can be delivered through an auxiliary heater in the supply line to bring it up to the required temperature. JP 2014202378 discloses another water heating system having a heat pump to heat water in a storage tank. Hot water is drawn from the storage tank for delivery through a supply line to taps. An auxiliary heater mounted in the supply line is operable to further heat the water if it is below a required temperature. Other examples of heating systems are disclosed in US2014/102124, FR2327495, WO2017/191505, DE3019318, WO2009/050396, WO2014/038339 and JP2014062697.

EP 3220063A1 discloses an interface module for a hybrid thermal plant for heating water for a sanitary plant and for heating or cooling water for an air conditioning plant. FR 3 028 922 A3 discloses a heating system which primarily generates heat from a heat pump, which is supplemented by heat from a boiler during cold weather. In CN 108 105 833 A there is disclosed a CO2 heat pump heating system with mechanically assisted subcooling. A multi-energy building energy supply system mainly based on solar energy and geothermal energy is disclosed in CN 110 030 650 A.

### Summary of the Invention

According to the invention there is provided an auxiliary heater for mounting in a heating circuit which includes a heat pump and an associated heating system, the auxiliary heater having the features of independent claim 1.

In an embodiment, the heat pump, the mixing tank and the heating system are all mounted in a heating water circulating line for circulating heating water through the heat pump, the mixing tank and the heating system, and the mixing tank is independently connected to the auxiliary heat exchanger by a feed line and an associated return line which are connected between the mixing tank and the auxiliary heat exchanger for circulating heating water between the mixing tank and the auxiliary heat exchanger.

In another embodiment of the invention the heat exchanger is operable in response to the sensed temperature of the heating water in the heating circuit.

In a further embodiment of the invention a heat pump bypass is provided for circulation of heating water between the mixing tank and the heating system, bypassing the heat pump.

In a further embodiment of the invention a non-return valve is provided in a heating water circulation line between the bypass and the heat pump.

In a further embodiment of the invention the mixing tank is connected to the auxiliary heat exchanger by the feed line to deliver heating water from the mixing tank to the auxiliary heat exchanger and the return line to deliver heating water from the auxiliary heat exchanger to the mixing tank, an inlet of the feed line being located at a bottom of the mixing tank and the return line having an outlet located in an upper half of the mixing tank.

In a further embodiment of the invention the circulating pump is mounted in the feed line.

In a further embodiment of the invention the auxiliary heat exchanger is a plate heat exchanger for connection to an auxiliary heating apparatus for circulating a heating fluid through the plate heat exchanger to heat the heating water in the plate heat exchanger.

In a further embodiment of the invention a thermistor is mounted on the mixing tank and connected to a controller, the controller being operably connected to the circulating pump to control the operation of the circulating pump in response to the sensed temperature of heating water in the mixing tank.

In a further embodiment of the invention the controller is operable to adjust the speed of the circulating pump in response to the sensed temperature of heating water in the mixing tank

### Brief Description of the Drawings

The invention will be more clearly understood by the following description of some embodiments thereof, given by way of example only with reference to the accompanying drawings, in which:
Fig. 1 is a perspective view of an auxiliary heater according to the invention;
Fig. 2 is an underneath perspective view of the auxiliary heater;
Fig. 3 is a front elevational view of the auxiliary heater;

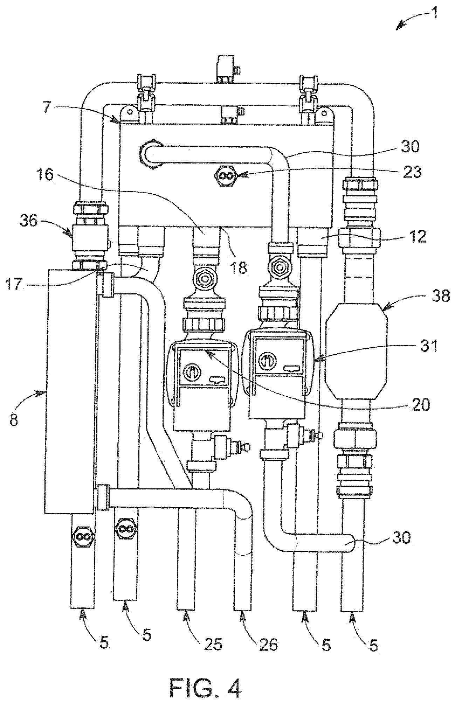

Fig. 4 is a detail elevational view showing portion of the auxiliary heater;
Fig. 5 is a schematic illustration of the auxiliary heater, shown in use mounted in a heating circuit; and

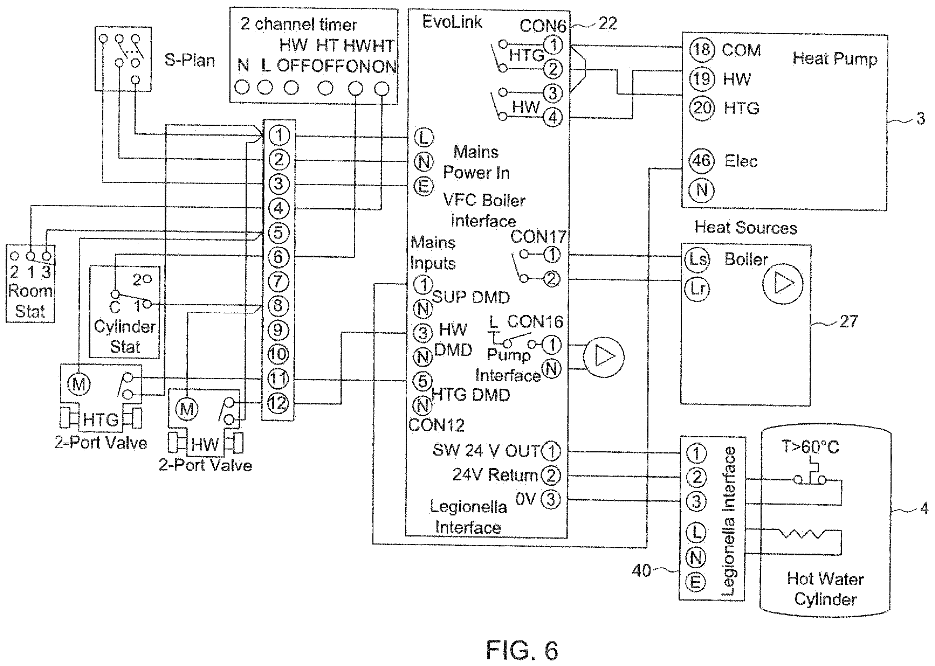

Fig. 6 is a circuit diagram for the auxiliary heater.

### Detailed Description of the Preferred Embodiments

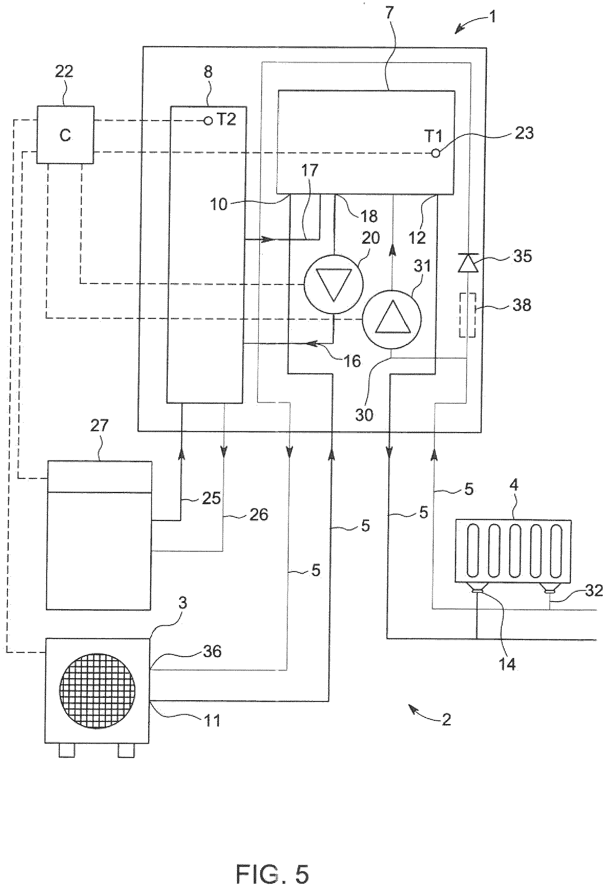

Referring to the drawings, there is illustrated an auxiliary heater according to the invention indicated generally by the reference numeral 1. Referring in particular to Fig. 5, the auxiliary heater 1 is for mounting in a heating circuit 2 which includes a heat pump 3 and an associated heating system 4 or load, which might, for example include a number of radiators located in different rooms of the building within which the heating circuit 2 is mounted. Heating water which is heated in the heat pump 3 is circulated through the heating system 4 by means of a heating water circulating line 5 of the heating circuit 2. The auxiliary heater 1 is shown mounted in the heating circuit 2 between the heat pump 3 and the heating system 4 to boost the temperature of the heating water when required. The auxiliary heater 1 comprises a mixing tank 7 through which the heating water is delivered by mounting the mixing tank 7 in the heating water circulating line 5 between the heat pump 3 and the heating system 4. An auxiliary heat exchanger 8 is connected to the mixing tank 7 for circulating heating water between the mixing tank 7 and the auxiliary heat exchanger 8 for heating the heating water.

The mixing tank 7 will typically have a capacity of about 4 litres, although this can vary depending on the application. A first heating water inlet 10 of the mixing tank 7 is for connection to a heating water outlet 11 of the heat pump 3, the heating water circulating line 5 delivering heating water from the heat pump 3 to the mixing tank 7. It will be noted that the first heating water inlet 10 projects into the mixing tank 7 and has an outlet located in an upper half of the mixing tank 7 and more preferably in the upper third or quarter of the mixing tank 7. A first heating water outlet 12 of the mixing tank 7 is for connection to a heating water inlet 14 of the heating system 4 through the heating water circulating line 5.

The mixing tank 7 is connected to the auxiliary heat exchanger 8 by a feed line 16 to deliver heating water from the mixing tank 7 to the auxiliary heat exchanger 8. A return line 17 connects between the auxiliary heat exchanger 8 and the mixing tank 7 to return the heating water from the auxiliary heat exchanger 8 to the mixing tank 7. It will be noted that an inlet 18 of the feed line 16 is located at a bottom of the mixing tank 7 and the return line 17 has an outlet 19 located in an upper half of the mixing tank 7 and more preferably in an upper third or one quarter of the mixing tank 7.

A circulating pump 20 is mounted in the feed line 16 and is operable to circulate heating water between the mixing tank 7 and the auxiliary heat exchanger 8. This pump 20 is operably connected to a controller 22. A thermistor 23 on the mixing tank 7 is also connected to the controller 22. The heat pump 3 also has a thermistor which is connected to the controller 22. The thermistor could be mounted at the heat pump 3 or in the circulating line 5 between the heat pump 3 and the mixing tank 7.

The circulating pump 20 is a variable speed pump. The controller 22 controls operation of the circulating pump 20 in response to the sensed temperature of the heating water within the mixing tank 7 and the sensed temperature of heating water discharged from the heat pump 3.

The auxiliary heat exchanger 8 is a plate heat exchanger. A heating side of the plate heat exchanger 8 is connected by a feed line 25 and a return line 26 with an auxiliary heating apparatus 27 which may conveniently be provided by an oil boiler, a wood pellet boiler, gas boiler, or the like. The controller 22 is also operably connected to the boiler 27 to operate the boiler 27 or other auxiliary heating apparatus and circulate heating fluid from the boiler 27 through the plate heat exchanger 8 to heat the heating water for the heating circuit 2.

Downstream of the heating system 4, heating water is delivered by the heating water circulating line 5 back to the heat pump 3. The heat pump 3 may be bypassed as the auxiliary heater 1 is provided with a bypass line 30 with associated circulating pump 31 which circulates water from an outlet 32 of the heating system 4 directly through the mixing tank 7, bypassing the heat pump 3. This circulating pump 31 can be manually switched on as required.

A non-return valve 35 may optionally be provided in the heating water circulating line 5 between the bypass line 30 and an inlet 36 of the heat pump 33. Optionally an energy meter 38 may be provided in the heating water circulating line 5 between the heating system 4 and the heat pump 3.

The heating system 4 may comprise one or both of a central heating system and a domestic hot water system.

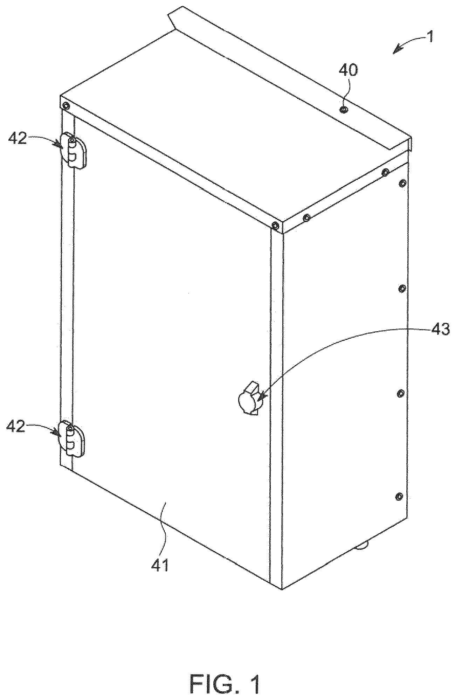

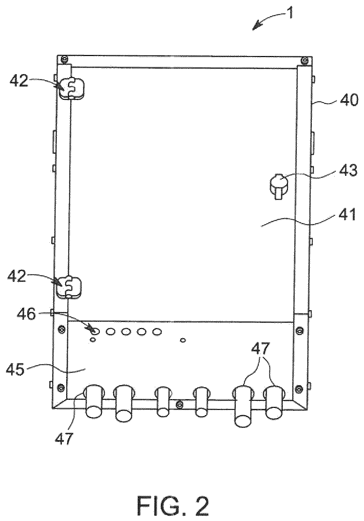

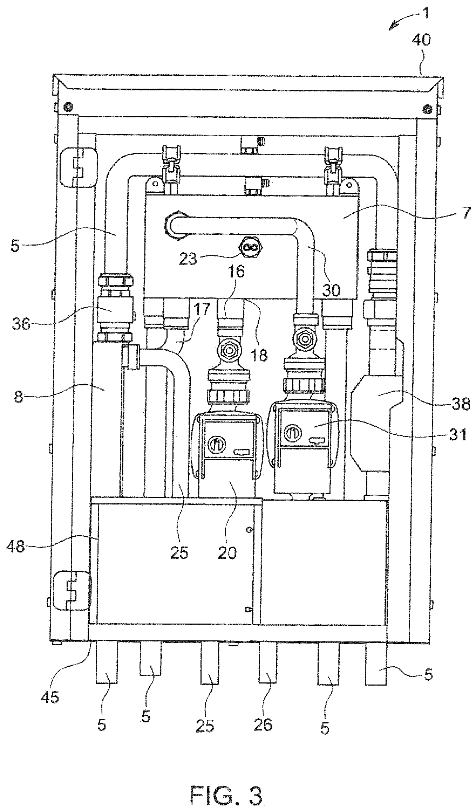

Referring in particular to Figs. 1 to 3, the mixing tank 7, auxiliary heat exchanger 8, controller 22 and associated pipework and circulating pumps 20, 31 are all mounted in a powder coated galvanised casing 40 having a front opening access door 41 mounted by hinges 42 on the casing 40. A lock 43 is provided for the door 41. The casing 40 has a bottom panel 45 which is provided with cable entrance through-holes 46 and pipe entrance through-holes 47. Electronic controls 48 are mounted within the casing 40 above the bottom panel 45.

External controls (not shown) on the casing 40 allow control of the auxiliary heater 1. Operation of a boost button gives one hour of boost, up to a maximum of 3 hours - the purpose of this being it allows the user to immediately switch on the auxiliary heater 1 without waiting for the controller 22 to do so automatically.

### Controller Specification

### Inputs and Outputs

1. Mains Demand input signals:
   a. Central Heating - (CH)
   b. Domestic Hot Water - (DHW)
   c. Supplementary heat demand from Heat Pump - (SUP)
2. Mains Outputs:
   a. Boiler demand signal - Volt Free Contact (VFC)
   b. Mixing pump output - Permanent Live (with PWM pump)
   c. System circulation pump - Switched live (Relay)
3. Low voltage inputs:
   a. Mixing tank temperature - 100K NTC
   b. Auxiliary heat source temperature - 100K NTC
   c. Outside Temperature Sensor - 10K NTC
   d. PWM signal from Wilo Pump
   e. Legionella feedback 24Vdc
4. Low Voltage outputs:
   a. PWM signal to Wilo Pump
   b. Heat Pump interface - Common, CH contact, DHW Contact.
   c. Legionella demand 24Vdc switched output
5. User Interface port:
   a. RS232 comms port (for local or remote User interface)
   b. RS232 comms port (for diagnostics)
   c. RS485 Modbus interface

### Functions

1. The controller 22 is the "hub" for all system demand signals both in from the heating system and out to the heat sources. It will accept demand signals from the Central heating and domestic hot water controls and will create a demand for heat from the heat pump 3 and supplementary heat source 27.
2. If the heat pump 3 can satisfy the load, then the controller 22 will remain inactive.
3. The controller 22 has two main operating modes *Para_Operating_*Mode:
   a. "Connected" where the controller 22 will require a feedback signal from the heat pump 3 if it cannot satisfy the load 4.
   b. "Autonomous" where the controller 22 can be programmed to call in the supplementary heat 27 if the load 4 cannot be satisfied. The parameters used for this are *Para_Time_below_CH_Setpoint, Para_Temperature_Below_CH_Setpoint, Para_Time_below_HW_Setpoint* and *Para_Temperature_Below_HW_Setpoint.*
      In each case if the heat pump 3 cannot satisfy the load 4, then a call will be made to the supplementary heat source 27 for heat via the VFC (Volt free contact).
4. If the system demand signal ends, then the demands to the heat pump 3 and/or the supplementary heat source 27 will end also.
5. There is an override which will allow the user to bypass the use of the heat pump 3, should it have failed, or if they choose to use the supplementary heat source 27.
6. There is a boost function which will allow the user to increase the temperature in the system for a selected duration.
7. The temperature control algorithm is as follows:
   a. The controller 22 will be programmed with the same CH and DHW setpoint temperatures as the heat pump 3. The parameters for the setpoints are *Para_CH_Setpoint* and *Para_HW_Setpoint,*
   b. In "Connected" mode, if the heat pump 3 calls for supplementary heat during a DHW demand the controller 22 will attempt to boost the flow temperature to the same as the *Para_HW_Setpoint.*
   c. In "Autonomous" mode, if the flow temperature during a HW demand is *Para_Temperature Below HW Setpoint* below the setpoint for *Para_Time_below_HW_Setpoint* then the controller 22 will use the supplementary heat source 27 to boost the flow temperature to the *Para_HW_Setpoint.*
   d. The controller 22 is programmed with the same weather compensation curve as in the heat pump 3. The parameters used are:
      *Para_Enable_Weather_Comp_Curve* which is set to True or False to enable or disable the Weather compensation function. This is a mirror of parameter 21 00.
      *Para_Max_Temp_in_Heating_Mode (Tm1)* and *Para_Min_outside_Temp_for_Max_Water_Temp (Te1)* which together form the lower coordinate on the compensation curve. These correspond to parameters 21 02 and 21 04 respectively.
      *Para_Min_Temp_in_Heating_Mode (Tm2)* and *Para_Max_outside_Temp_for*_*Min_Water_Temp (Te2)* which together form the upper coordinate on the compensation curve. These correspond to parameters 21 03 and 21 05 respectively. 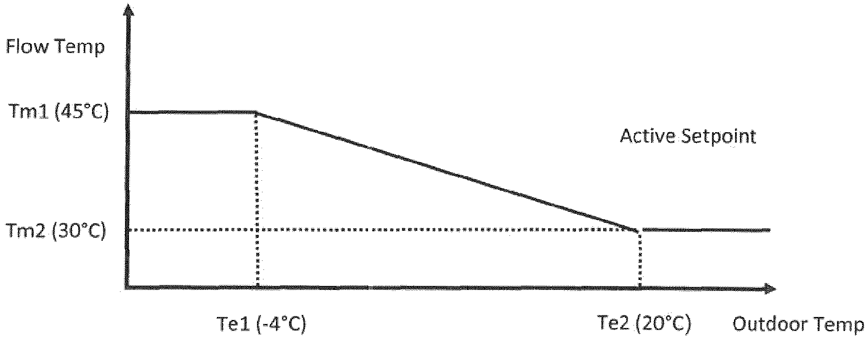
8. Legionella function.
   The control board has a 24V legionella interface 40 which operates as follows:
   a. The user can program the number of hot water demands before the legionella function is triggered. For example if there are 2 hot water demand per day and the Legionella function was required once per week, then 14 would be programmed into this parameter.
   b. The legionella function will drive the 24V output which can be used to switch a contactor to bring on an electric heater. The signal from the heater thermostat can be fed back to the control board, this will enable the control board to know that the required water temperature in the hot water cylinder 4 has been reached.

### Parameter Table

| Parameter | . Short form | Default | min | max | unit | Comment |
|---|---|---|---|---|---|---|
| Para_CH_Setpoint | CH SETPOINT | 45 | 30 | 75 | °C | |
| Para_HW_Setpoint | HW SETPOINT | 55 | 40 | 80 | °C | |
| Para_Temperature_Below_HW_Setpoint | HW BELOW SP | 5 | 0 | 10 | °C | |
| Para_Time_below_HW_Setpoint | HW TIMER SP | 5 | 0 | 10 | 1 min | |
| Para_Enable_Weather_Comp_Curve | W COMP | 1 | 0 | 1 | | |
| Para_Max_Temp_in_Heating_Mode | MAX TM1 | 45 | 23 | 60 | °C | |
| Para_Min_Temp_in_Heating_Mode | MIN TM2 | 30 | 23 | 60 | °C | |
| Para_Min_outside_Temp_for_Max Water_Temp | MAX TE1 | -4 | -20 | 50 | °C | |
| Para_Max_outside_Temp_for_Min_Water_Temp | MIN TE2 | 20 | 0 | 40 | °C | |
| Para_Boost_Mode_Timer | BOOST MODE | 30 | 0 | 120 | Min | |
| Para_Override | OVERRIDE | | | | | |
| | | | | | | |
| | | | | | | |
| | | | | | | |
| | | | | | | |
| | | | | | | |
| | | | | | | |

User Interface includes:
1. Start/Home Screen
2. Setpoint\Temp Screen
3. Demand state\Heat source Screen
4. Parameter setting screen
   To get to Setting screen hold the confirm button for 5 seconds.
5. Parameter settings second screen
6. Parameter settings second screen
7. Parameter settings second screen

### Communications:

Type: UART
BAUD: 9600

### Frame description:

### From Master (Main board) to Slave (User Interface board)

| 1 | 2 | 3 | 4 | 5 | 6 | 7 | 8 | 9 | 10 | 11 | 12 |
|---|---|---|---|---|---|---|---|---|---|---|---|
| SOF | LOF | IN | OUT | CHSP | HWSP | MTH | MTL | STH | STL | PMPO% | CS |

1. Start of Frame Character
2. Length of Frame
3. Demand/Mode Inputs (Bits LSB to MSB)
   a. Central Heating
   b. Hot Water
   c. Supplementary Heat
   d. -
   e. Boost
   f. Override
   g. -
   h. -
4. Demand/Mains Outputs (Bits LSB to MSB)
   a. Central Heating Demand
   b. Hot Water Demand
   c. Supplementary Heating Demand
   d. -
   e. Mixing Pump Mains
   f. Circulating Pump Mains
   g. -
   h. -
5. Central Heating Setpoint
6. Hot Water Setpoint
7. Mixing Tank Temperature (High Byte)
8. Mixing Tank Temperature (Low Byte)
9. Supplementary Heat Source Temperature (High Byte)
10. Supplementary Heat Source Temperature (Low Byte)
11. Mixing Pump PWM Output %
12. Mixing Pump PWM Input %
13. Checksum

### From Slave (User Interface board) to Master (Main board)

| 1 | 2 | 3 | 4 | 5 | 6 |
|---|---|---|---|---|---|
| SOF | LOF | MODE | CHSP | HWSP | CS |

1. Start of Frame Character
2. Length of Frame
3. Demand/Mode Inputs (Bits LSB to MSB)
   a. Boost Time bit
   b. Boost Time bit
   c. Boost Time bit
   d. -
   e. -
   f. Override
   g. -
   h. -
4. Central Heating Setpoint
5. Hot Water Setpoint
6. Checksum

Checksum -
Timing -
Boost Time bits
000 - Boost not set
001 - Boost 30 minutes
010 - Boost 60 minutes
011 - Boost 90 minutes
100 - Boost 120 minutes

In use, the heat pump 3 is used for normal heating of the heating system 4, heating and circulating heating water through the heating water circulating line 5 for delivery through the heating system 4. Typically the temperature of the heating water will be in the order of 65-70°C. In very cold conditions, the heat pump 3 may not be able to supply sufficient heat to the heating water. In this case, heating water is circulated between the mixing tank 7 and the plate heat exchanger 8 to boost the temperature of the heating water to the required temperature. When the thermistor on the heat pump 3 indicates to the controller 22 that the required heating water temperature is not being achieved by the heat pump 3, the controller 22 will switch on the auxiliary heating system boiler 27. The circulating pump 20 is not switched on until the heating fluid in the feed line 25 from the boiler 27 to the auxiliary heat exchanger 8 reaches a preset minimum required temperature of about 60°C. The circulating pump 20 is then switched on by the controller 22 to circulate heating water between the mixing tank 7 and the auxiliary heat exchanger 8 for added heating of the heating water to bring it up to the required temperature of 65-70°C. The controller 22 can control operation of the circulating pump 20 to maintain the temperature of the heating water as sensed by the thermistor 23 on the mixing tank 7 within a desired temperature range.

If desired, the heat pump 3 may be bypassed by operation of the circulating pump 31 in the bypass line 30 so that heating water from the heating circuit 2 is delivered between the mixing tank 7 and the heating system 4.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. An auxiliary heater (1) for mounting in a heating circuit (2) which includes a heat pump (3) and an associated heating system (4), the auxiliary heater (1) including a mixing tank (7) for mounting in the heating circuit (2) for circulation of heating water from the heating circuit (2) through the mixing tank (7), the mixing tank (7) having a first heating water inlet (10) for connection to a heating water outlet (11) of the heat pump (3), and a first heating water outlet (12) for connection to a heating water inlet (14) of the heating system (4), an auxiliary heat exchanger (8) connected to the mixing tank (7) for circulating heating water between the mixing tank (7) and the auxiliary heat exchanger (8), the first heating water inlet (10) has an outlet located in an upper half of the mixing tank (7) and the first heating water outlet (12) is located at a bottom of the mixing tank (7), wherein the auxiliary heater comprises a circulating pump mounted between the mixing tank and the auxiliary heat exchanger for circulating heating water between the mixing tank and the auxiliary heat exchanger,
**characterised in that** said circulating pump is operable in response to a sensed heating temperature within the auxiliary heat exchanger.

2. The auxiliary heater (1) as claimed in claim 1, comprising a feed line (16), an associated return line (17) and a heating water circulating line (5) for circulating heating water through the heat pump (3), the mixing tank (7) and the heating system (4), wherein the heat pump (3), the mixing tank (7) and the heating system (4) are all mounted in said heating water circulating line (5), and the mixing tank (7) is independently connected to the auxiliary heat exchanger (8) by said feed line (16) and said associated return line (17) which are connected between the mixing tank (7) and the auxiliary heat exchanger (8) for circulating heating water between the mixing tank (7) and the auxiliary heat exchanger (8)

3. The auxiliary heater (1) as claimed in claim 1 or claim 2 wherein the auxiliary heat exchanger (8) is operable in response to the sensed temperature of the heating water in the heating circuit (2).

4. The auxiliary heater (1) as claimed in any preceding claim, comprising a heat pump bypass (30) provided for circulation of heating water between the mixing tank (7) and the heating system (4), bypassing the heat pump (3).

5. The auxiliary heater (1) as claimed in claims 2 and 4, comprising a non-return valve (35) provided in the heating water circulation line (5) between the bypass (30) and the heat pump (3).

6. The auxiliary heater (1) as claimed in claim 2, wherein the mixing tank (7) is connected to the auxiliary heat exchanger (8) by the feed line (16) to deliver heating water from the mixing tank (7) to the auxiliary heat exchanger (8) and the associated return line (17) to deliver heating water from the auxiliary heat exchanger (8) to the mixing tank (7), an inlet of the feed line being located at a bottom of the mixing tank (7) and the associated return line (17) having an outlet located in an upper half of the mixing tank (7).

7. The auxiliary heater (1) as claimed in claim 2, wherein the circulating pump (20) is mounted in the feed line (16).

8. The auxiliary heater (1) as claimed in any preceding claim, wherein the auxiliary heat exchanger (8) is a plate heat exchanger for connection to an auxiliary heating apparatus (27) for circulating a heating fluid through the plate heat exchanger (8) to heat the heating water in the plate heat exchanger (8).

9. The auxiliary heater (1) as claimed in any preceding claim, comprising a thermistor (23) mounted on the mixing tank (7) and connected to a controller (22), the controller (22) being operably connected to the circulating pump (20) to control the operation of the circulating pump (20) in response to the sensed temperature of heating water in the mixing tank (7).

10. The auxiliary heater (1) as claimed in claim 9, wherein the controller (22) is operable to adjust the speed of the circulating pump (20) in response to the sensed temperature of heating water in the mixing tank (7).

## Patentansprüche

1. Zusatzheizung (1) zum Montieren in einem Heizkreislauf (2), der eine Wärmepumpe (3) und ein zugehöriges Heizsystem (4) einschließt, wobei die Zusatzheizung (1) einschließt: einen Mischtank (7) zum Montieren in dem Heizkreislauf (2) für eine Umwälzung von Heizwasser aus dem Heizkreislauf (2) durch den Mischtank (7), wobei der Mischtank (7) einen ersten Heizwassereinlass (10) für eine Verbindung mit einem Heizwasserauslass (11) der Wärmepumpe (3) und einen ersten Heizwasserauslass (12) für die Verbindung mit einem Heizwassereinlass (14) des Heizsystems (4) aufweist, einen Zusatzwärmetauscher (8), der mit dem Mischtank (7) verbunden ist, zum Umwälzen von Heizwasser zwischen dem Mischtank (7) und dem Zusatzwärmetauscher (8), wobei der erste Heizwassereinlass (10) einen Auslass aufweist, der in einer oberen Hälfte des Mischtanks (7) angeordnet ist, und der erste Heizwasserauslass (12) an einem Boden des Mischtanks (7) angeordnet ist, wobei die Zusatzheizung eine Umwälzpumpe umfasst, die zwischen dem Mischtank und dem Zusatzwärmetauscher montiert ist, zum Umwälzen von Heizwasser zwischen dem Mischtank und dem Zusatzwärmetauscher,
**dadurch gekennzeichnet, dass** die Umwälzpumpe als Reaktion auf eine erfasste Heiztemperatur innerhalb des Zusatzwärmetauschers betriebsfähig ist.

2. Zusatzheizung (1) nach Anspruch 1, umfassend eine Zuleitung (16), eine zugehörige Rückleitung (17) und eine Heizwasserumwälzleitung (5) zum Umwälzen von Heizwasser durch die Wärmepumpe (3), den Mischtank (7) und das Heizsystem (4), wobei die Wärmepumpe (3), der Mischtank (7) und das Heizsystem (4) alle in der Heizwasserumwälzleitung (5) montiert sind, und der Mischtank (7) mit dem Zusatzwärmetauscher (8) über die Zuleitung (16) und die zugehörige Rückleitung (17) unabhängig verbunden ist, die zwischen dem Mischtank (7) und dem Zusatzwärmetauscher (8) zum Umwälzen von Heizwasser zwischen dem Mischtank (7) und dem Zusatzwärmetauscher (8) verbunden sind.

3. Zusatzheizung (1) nach Anspruch 1 oder 2, wobei der Zusatzwärmetauscher (8) als Reaktion auf die erfasste Temperatur des Heizwassers in dem Heizkreislauf (2) betriebsfähig ist.

4. Zusatzheizung (1) nach einem der vorstehenden Ansprüche, umfassend eine Wärmepumpenumgehung (30), die für die Umwälzung von Heizwasser zwischen dem Mischtank (7) und dem Heizsystem (4) bereitgestellt ist, die die Wärmepumpe (3) umgeht.

5. Zusatzheizung (1) nach den Ansprüchen 2 und 4, umfassend ein Rückschlagventil (35), das in der Heizwasserumwälzungsleitung (5) zwischen der Umgehung (30) und der Wärmepumpe (3) bereitgestellt ist.

6. Zusatzheizung (1) nach Anspruch 2, wobei der Mischtank (7) mit dem Zusatzwärmetauscher (8) über die Zuleitung (16), um Heizwasser von dem Mischtank (7) zu dem Zusatzwärmetauscher (8) zu fördern, und der zugehörigen Rückleitung (17) verbunden ist, um Heizwasser von dem Zusatzwärmetauscher (8) zu dem Mischtank (7) zu fördern, wobei ein Einlass der Zuleitung an einem Boden des Mischtanks (7) angeordnet ist und die zugehörige Rückleitung (17) einen Auslass, der in einer oberen Hälfte des Mischtanks (7) angeordnet ist, aufweist.

7. Zusatzheizung (1) nach Anspruch 2, wobei die Umwälzpumpe (20) in der Zuleitung (16) montiert ist.

8. Zusatzheizung (1) nach einem der vorstehenden Ansprüche, wobei der Zusatzwärmetauscher (8) ein Plattenwärmetauscher für die Verbindung mit einer Zusatzheizeinrichtung (27) zum Umwälzen eines Heizfluids durch den Plattenwärmetauscher (8) ist, um das Heizwasser in dem Plattenwärmetauscher (8) zu erwärmen.

9. Zusatzheizung (1) nach einem der vorstehenden Ansprüche, umfassend einen Thermistor (23), der an dem Mischtank (7) montiert und mit einer Steuerung (22) verbunden ist, wobei die Steuerung (22) mit der Umwälzpumpe (20) betriebsfähig verbunden ist, um den Betrieb der Umwälzpumpe (20) als Reaktion auf die erfasste Temperatur von Heizwasser in dem Mischtank (7) zu steuern.

10. Zusatzheizung (1) nach Anspruch 9, wobei die Steuerung (22) betriebsfähig ist, um die Drehzahl der Umwälzpumpe (20) als Reaktion auf die erfasste Temperatur von Heizwasser in dem Mischtank (7) anzupassen.

## Revendications

1. Chauffage auxiliaire (1) pour montage dans un circuit de chauffage (2) qui comporte une pompe à chaleur (3) et un système de chauffage (4) associé, le chauffage auxiliaire (1) comportant un réservoir de mélange (7) pour montage dans le circuit de chauffage (2) pour la circulation d'eau de chauffage à partir du circuit de chauffage (2) à travers le réservoir de mélange (7), le réservoir de mélange (7) ayant une première entrée d'eau de chauffage (10) pour raccordement à une sortie d'eau de chauffage (11) de la pompe à chaleur (3), et une première sortie d'eau de chauffage (12) pour raccordement à une entrée d'eau de chauffage (14) du système de chauffage (4), un échangeur de chaleur auxiliaire (8) raccordé au réservoir de mélange (7) permettant de faire circuler de l'eau de chauffage entre le réservoir de mélange (7) et l'échangeur de chaleur auxiliaire (8), la première entrée d'eau de chauffage (10) a une sortie localisée dans une moitié supérieure du réservoir de mélange (7) et la première sortie d'eau de chauffage (12) est localisée au niveau d'un fond du réservoir de mélange (7), dans lequel le chauffage auxiliaire comprend une pompe à circulation qui est montée entre le réservoir de mélange et l'échangeur de chaleur auxiliaire permettant de faire circuler de l'eau de chauffage entre le réservoir de mélange et l'échangeur de chaleur auxiliaire,
**caractérisé en ce que** ladite pompe à circulation est fonctionnelle en réponse à une température de chauffage détectée au sein de l'échangeur de chaleur auxiliaire.

2. Chauffage auxiliaire (1) selon la revendication 1, comprenant une ligne d'alimentation (16), une ligne de retour associée (17) et une ligne de circulation d'eau de chauffage (5) permettant de faire circuler de l'eau de chauffage à travers la pompe à chaleur (3), le réservoir de mélange (7) et le système de chauffage (4), dans lequel la pompe à chaleur (3), le réservoir de mélange (7) et le système de chauffage (4) sont tous montés dans ladite ligne de circulation d'eau de chauffage (5), et le réservoir de mélange (7) est indépendamment raccordé à l'échangeur de chaleur auxiliaire (8) par ladite ligne d'alimentation (16) et ladite ligne de retour associée (17) qui sont raccordées entre le réservoir de mélange (7) et l'échangeur de chaleur auxiliaire (8) permettant de faire circuler de l'eau de chauffage entre le réservoir de mélange (7) et l'échangeur de chaleur auxiliaire (8)

3. Chauffage auxiliaire (1) selon la revendication 1 ou la revendication 2 dans lequel l'échangeur de chaleur auxiliaire (8) est fonctionnel en réponse à la température détectée de l'eau de chauffage dans le circuit de chauffage (2).

4. Chauffage auxiliaire (1) selon l'une quelconque revendication précédente, comprenant un contournement de pompe à chaleur (30) fourni pour la circulation d'eau de chauffage entre le réservoir de mélange (7) et le système de chauffage (4), contournant la pompe à chaleur (3).

5. Chauffage auxiliaire (1) selon les revendications 2 et 4, comprenant un clapet anti-retour (35) fourni dans la ligne de circulation d'eau de chauffage (5) entre le contournement (30) et la pompe à chaleur (3).

6. Chauffage auxiliaire (1) selon la revendication 2, dans lequel le réservoir de mélange (7) est raccordé à l'échangeur de chaleur auxiliaire (8) par la ligne d'alimentation (16) pour délivrer de l'eau de chauffage à partir du réservoir de mélange (7) vers l'échangeur de chaleur auxiliaire (8) et par la ligne de retour associée (17) pour délivrer de l'eau de chauffage à partir de l'échangeur de chaleur auxiliaire (8) vers le réservoir de mélange (7), une entrée de la ligne d'alimentation étant localisée au niveau d'un fond du réservoir de mélange (7) et la ligne de retour associée (17) ayant une sortie localisée dans une moitié supérieure du réservoir de mélange (7).

7. Chauffage auxiliaire (1) selon la revendication 2, dans lequel la pompe à circulation (20) est montée dans la ligne d'alimentation (16).

8. Chauffage auxiliaire (1) selon l'une quelconque revendication précédente, dans lequel l'échangeur de chaleur auxiliaire (8) est un échangeur de chaleur à plaques pour raccordement à un appareil de chauffage auxiliaire (27) permettant de faire circuler un fluide chauffant à travers l'échangeur de chaleur à plaques (8) pour chauffer l'eau de chauffage dans l'échangeur de chaleur à plaques (8).

9. Chauffage auxiliaire (1) selon l'une quelconque revendication précédente, comprenant une thermistance (23) montée sur le réservoir de mélange (7) et connectée à un organe de commande (22), l'organe de commande (22) étant connecté fonctionnellement à la pompe à circulation (20) pour commander le fonctionnement de la pompe à circulation (20) en réponse à la température détectée de l'eau de chauffage dans le réservoir de mélange (7).

10. Chauffage auxiliaire (1) selon la revendication 9, dans lequel l'organe de commande (22) est fonctionnel pour ajuster la vitesse de la pompe à circulation (20) en réponse à la température détectée de l'eau de chauffage dans le réservoir de mélange (7).
